# EUROPÄISCHE PATENTSCHRIFT

(11) **EP 0 641 681 B1**
(45) Veröffentlichungstag und Bekanntmachung des Hinweises auf die Patenterteilung: **05.03.1997**
(21) Anmeldenummer: 94250222.0
(22) Anmeldetag: 08.09.1994
(51) Int. Cl.: B60F 1/04, B61F 5/20

(54) **Drehgestell, insbesondere für Zweiwegefahrzeuge**
Bogie especially for rail/road vehicles
Bogie en particulier pour véhicules rail-route

(30) Priorität: 08.09.1993 DE 4330951
(43) Veröffentlichungstag der Anmeldung: 08.03.1995
(73) Patentinhaber: Deutsche Waggonbau AG, 12527 Berlin (DE)
(72) Erfinder: Wenke, Siegbert, D-02943 Reichwalde (DE); Lange, Rüdiger, D-02906 Niesky (DE); Wieloch, Bertram, D-02906 Niesky (DE); Streich, Rüdiger, D-81927 München (DE); Kappler, Detlef, D-02923 Kosel (DE)
(74) Vertreter: Köhler, Reimund

(56) Entgegenhaltungen:
- DE-B- 1 011 453
- DE-C- 399 305
- DE-C- 401 004
- FR-A- 1 053 520

## Beschreibung

Die Erfindung bezieht sich auf ein Wiegen-Drehgestell mit geringem Hüllraum nach Patentanspruch 1.

Fahrzeuge für Straßen- und Schienenbetrieb sind bekannt. Nach der DE-C-2625887 wird ein Drehschemel hinter der hinteren Radachse des Fahrzeuges angeordnet und ist um mindestens 180° um eine vertikale Achse drehbar gelagert. Die Aufhängung und die Konstruktion für das Ausheben des Schemels über Kniehebel setzt einen relativ hohen Platzbedarf oberhalb des Schemels voraus, und es sind eine Vielzahl von Gelenken erforderlich, die einem hohen Verschleiß unterliegen und damit die gesamte Konstruktion komplizieren. Mit den bekannten Einrichtungen werden die Drehgestelle um die Fahrzeuglängsachse nur über die Fahrzeugfederung (Rollenfedern) ausgedreht. Die Endlagensicherung wird bei den bekannten Einrichtungen über den Totpunkt ausgelenkter Kniehebel erreicht. Mit der DE-C-1913878 ist eine Schienenführungseinrichtung bekannt, die mittels Hydraulik und dabei mittels zweimal zwei Hydraulikzylindern heb- und senkbar und zusätzlich untereinander mit Ventilsteuerungen verbunden sind, wobei die Hydraulikzylinder immer nur parallel wirken und nur einen konstanten Andruck aller Schienenräder bewirken. Bei dem bekannten Straßenfahrzeug nach DD-A-98469 wird beidseitig die Führung durch Spurstangen bewirkt. Diese Doppelanlenkung ist ebenfalls aufwendig und verschleißbehaftet.

Aufgabe der Erfindung ist es, ein Wiegen-Drehgestell, insbesondere für Zweiwegefahrzeuge der eingangs genannten Art zu schaffen, das die genannten Nachteile der bekannten Lösungen vermeidet und einen geringen Hüllraum beansprucht, das das entgleisungssichere Befahren auch von schlechten Gleisanlagen ermöglicht, das sowohl für die Verwendung unter schienenfahrzeugtypischen Untergestellen als auch für die Aufnahme einer Verbindungseinrichtung zwischen Drehgestell und Unterrahmen eines Straßenfahrzeuges geeignet ist, wobei das Drehgestell eine elastische Aufnahme von Stößen in vertikaler, aber auch in Fahrzeuglängs- und in Fahrzeugquerrichtung und ein verbessertes Aufgleisen auf Bahnübergängen ermöglicht, wobei das Drehgestell und die Einrichtung auf dem Drehgestell unkompliziert in der konstruktiven Ausbildung ist und zusätzliche Einrichtungen zur Stabilisierung des Betätigungsträgers vermeidet.

Die Aufgabe wird erfindungsgemäß durch die Merkmale des Patentanspruchs 1 gelöst, daß heißt, daß das Drehgestell als verwindungsweiches Drehgestell mit neu angeordneter Federung der Wiege ausgebildet wird und die wählbare Verbindungseinrichtung zwischen Wiege und Unterrahmen des Straßenfahrzeuges auf einem Betätigungsträger festgemacht ist, wobei die verwendeten Hubeinrichtungen in der Art von Hydraulikzylindern versetzt auf diesem Betätigungsträger befestigt werden und der Betätigungsträger über eine torsionssteife Schwinge mit dem Unterrahmen des Straßenfahrzeuges verbunden ist. Ein weiteres Merkmal der Erfindung ist die neuartige Anbringung der an den Ecken des Drehgestellrahmens vorgesehenen Federelemente in der Art, daß die Federaußenkanten außerhalb der Anflanschebenen der Räder liegen. Es ist im Sinne der Erfindung, daß zweimal zwei Hubeinrichtungen symmetrisch auf dem Betätigungsträger angeordnet sind.

Ein Ausführungsbeispiel der Erfindung soll anhand der Zeichnung näher erläutert werden. Die Zeichnung zeigt in:
- Fig. 1:: die Seitenansicht des Drehgestells mit Verbindungseinrichtung zum Unterrahmen des Straßenfahrzeuges,
- Fig. 2:: die Draufsicht auf das Drehgestell mit in einer Hälfte dargestelltem Betätigungsträger ohne der den Betätigungsträger und den Unterrahmen des Straßenfahrzeuges verbindenden Schwinge und Hubeinrichtung.

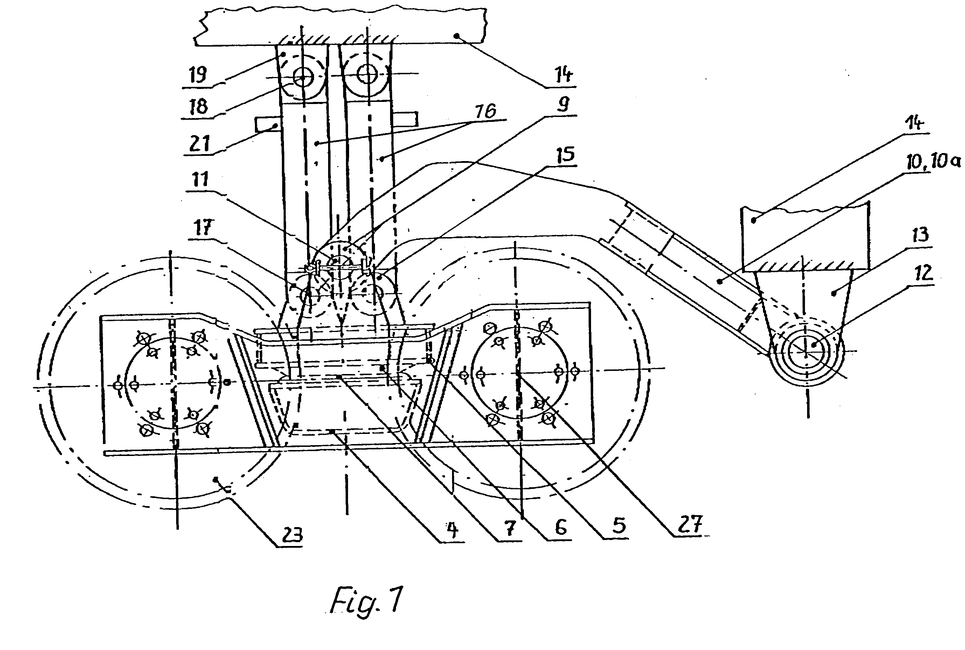

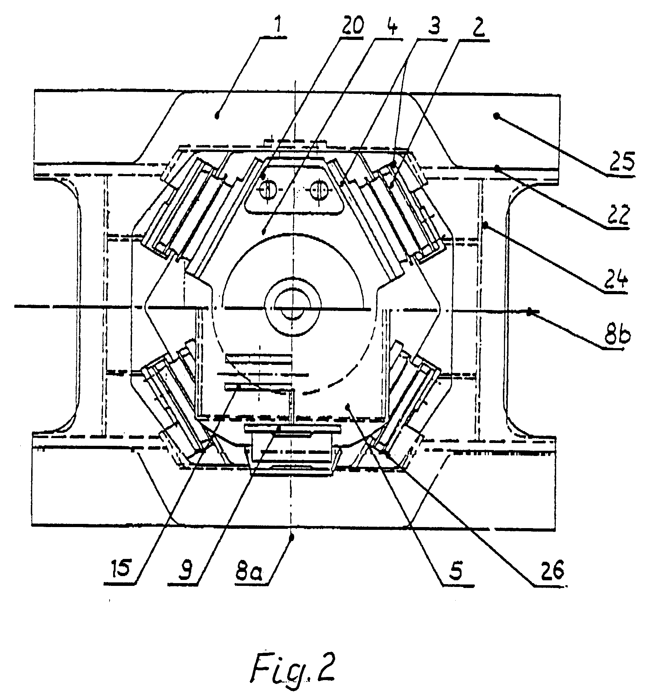

Nach Fig. 1 besteht das für Zweiwegefahrzeuge geeignete Drehgestell aus dem durch die beiden in der Achsmitte 27 der Räder 23 liegenden Querträger 24 und den beiden außenliegenden Langträgern 25 gebildeten Drehgestellrahmen 1. Die Querträger 24 und die Langträger 25 des Drehgestellrahmens 1 bestehen aus offenen Profilen und bilden somit einen offenen verwindungsweichen Drehgestellrahmen 1. Der Drehgestellrahmen 1 ist mit den Lauf- bzw. angetriebenen Rädern 23 kraftschlüssig verbunden. In der gleichen Höhenebene des verwindungsweichen Drehgestellrahmens 1 befindet sich die Wiege 4 des Drehgestelles, die sich gemäß Fig. 2 mit den Ecken über Auflagen 3 an schräg angeordneten Federn 2 über Auflagen 3 auf dem verwindungsweichen Drehgestellrahmen 1 abstützen. Durch die in allen drei Ebenen federnde Abstützung der Wiege 4 in den Rahmenecken werden die auf den verwindungsweichen Drehgestellrahmen 1 wirkenden Biegemomente reduziert und die auf die Wiege 4 wirkenden Biegemomente werden in Fahrzeuglängs- und Fahrzeugquerrichtung in etwa gleich groß, so daß sich durch die in beiden Richtungen gleichmäßige Beanspruchung der Wiege 4 und die dabei eintretende Reduzierung der auf den Drehgestellrahmen 1 wirkenden Biegemomente für die Wiege 4 und den verwindungsweichen Drehgestellrahmen 1 nur geringe Bauhöhen ergeben. Durch diese geringen Bauhöhen wird der geringe Drehgestellhüllraum erreicht. Auf dieser Wiege 4 stützt sich eine Kugeldrehpfanne und über feste oder gefederte Gleitstücke 20 der über eine Schwinge 10 und Hydraulikzylinder (Hubeinrichtung) 16 mit dem Unterrahmen 14 eines Straßenfahrzeuges verbundene Betätigungsträger 5 ab. Die Gleitstücke 20 sind beidseitig zur Längsmitte 8b auf der Quermitte 8a der Wiege 4 angeordnet. Auf der Oberseite der Wiege 4 ist das Drehpfannenunterteil 7 und an der Unterseite des Betätigungsträgers 5 das Drehpfannenoberteil 6 der Kugeldrehpfanne angebracht. Durch die kugelförmige Drehpfanne und durch das Spiel, das zwischen den Gleitstücken 20 bzw. durch die im Sinne der Erfindung denkbare Gleitstückfederung vorhanden ist, entsteht zwischen Wiege 4 und Betätigungsträger 5 eine annähernd kardanische Verbindung, über die neben der Ausdrehmöglichkeit des Drehgestells, die Gleislagefehler in Fahrzeuglängs- und Fahrzeugquerrichtung ausgeglichen werden können. Auf dem Betätigungsträger 5 sind beidseitig zur Längsmitte 8b auf der Quermitte 8a Konsolen 9 angeordnet, die jeweils einen Schwingenarm 10a der Schwinge 10 mittels Bolzen 11 gelenkig aufnehmen. Die Schwingenarme 10a sind gemeinsam an einem Rohr torsionsfest miteinander verbunden, und das Rohr ist über eine Gelenkverbindung 12 und dazugehörigen Konsolen 13 mit dem Unterrahmen 14 des Straßenfahrzeuges gelenkig verbunden. Auf dem Betätigungsträger 5 sind desweiteren beidseitig zur Längsmitte 8b jedoch zur Quermitte 8a versetzt, je eine Hubeinrichtung 16, denkbar aber auch symmetrisch zweimal zwei Hubeinrichtungen 16, an Konsolen 15 mittels Bolzen 17 und mit ihren anderen Enden über Bolzen 18 und Konsolen 19 an dem Unterrahmen 14 des Straßenfahrzeuges gelenkig angebracht. Die Hubeinrichtungen 16 sind mit einer in der Zeichnung nicht näher dargestellten Endlagensicherung, einer Verriegelung 21 ausgestattet, die die Hubeinrichtungen 16 in ausgefahrener Stellung blockieren. Die diagonale Anordnung der Hubeinrichtungen 16 auf dem Betätigungsträger 5 bewirkt während des Aushebens eine gleichmäßige Belastung der Schienenfahreinrichtung über die Kugeldrehpfanne und verhindert im ausgehobenen Zustand über die blockierten Hubeinrichtungen 16 ein Kippen des Betätigungsträgers 5 in Fahrzeuglängs- bzw. Fahrzeugquerrichtung. In angehobener Stellung, in der Schienenfahrstellung, werden durch die diagonale Anordnung der Hubeinrichtungen 16 weiterhin alle während der Fahrt auftretenden Brems- und Beschleunigungsmomente durch diese aufgenommen. Die Schwinge 10, die gelenkig am Unterrahmen 14 des Straßenfahrzeuges und am Betätigungsträger 5 in der beschriebenen Art und Weise angreift, dient zur Längsführung der Schienenfahreinrichtung während der Hub- bzw. Senkbewegung und zur Aufnahme der Kräfte in horizontaler Längs- und Querrichtung während der Phase der Fortbewegung auf der Schiene. Außerdem wird das bei Ausfall eines der beiden Hubeinrichtungen 16 entstehende Kippmoment durch die Schwinge 10 als Kräftepaar aufgenommenen und auf dem Unterrahmen 14 des Straßenfahrzeuges übertragen, womit auch bei diesem als Havarie anzusehenden Fall ein Kippen des Straßenfahrzeuges verhindert wird. Nach einem weiteren Merkmal der Erfindung können zur Erreichung eines ausreichenden Federmittenquerabstandes ,beispielsweise bei Schmalspurdrehgestellen die Federaußenkanten 26 außerhalb der Anflanschebenen 22 der Räder 23 liegen. Durch das Blockieren der Hubeinrichtungen 16 in bekannter Weise wird in den jeweiligen Endstellungen zwischen dem Unterrahmen 14 des Straßenfahrzeuges und dem Betätigungsträger 5 eine starre Verbindung hergestellt, über die durch die erfindungsgemäße Anordnung der Konsolen 15 ein Drehen des Betätigungsträgers 5 in der Fahrzeuglängs- und Fahrzeugquerachse verhindert wird. Die vorgeschlagene Lösung hat den Vorteil, daß Stöße in Querrichtung durch die biegeweiche Schwinge 10 elastisch aufgenommen werden, daß bei Ausfall eines der beiden Hubeinrichtungen 16 durch die Schwinge 10 eine Mindestbetriebsbereitschaft gewährleistet wird, daß das Aufgleisen in Kurven mit Oberhöhung bzw. bei Gleisunebenheiten durch mögliche Schrägstellung des Drehgestells gewährleistet wird, da beim Ausfahren beider Hubeinrichtungen 16 eine Radseite zuerst aufsetzt und dann die andere Seite nachfolgt bis beide Hubeinrichtungen 16 in der Endstellung durch die Verriegelung 21 blockiert werden. Das ist auch für den Fall ein Vorteil, daß das Aufgleisen der beiden Drehgestelle nacheinander erfolgt. Ein weiterer Vorteil der vorgeschlagenen Lösung liegt darin, daß Versatzmomente aus Beschleunigungen und Bremsen durch die diagonale Anordnung der Hubeinrichtungen 16 aufgenommen werden. Die Erfindung hat auch den Vorteil, daß das Drehgestell allein für sich auch für Niederflurwagen verwendet werden kann. Die Kugeldrehpfanne liegt dann zwischen Wiege 4 und Untergestell des Schienenfahrzeuges. Durch die Verbindung der Wiege 4 und des Betätigungsträgers 5 über die Kugeldrehpfanne und die seitlichen Gleitstücke 20 sind große Drehgestellausdrehwinkel möglich, welche das beschriebene Aufgleisen des Straßenfahrzeuges auch an Orten des Überganges Schiene/Straße funktionell ermöglichen. Da der Betätigungsträger 5 über die Schwinge 10 auch in Fahrzeuglängs- und Fahrzeugquerrichtung kraftschlüssig mit dem Unterrahmen 14 des Straßenfahrzeuges verbunden ist, ist der Betätigungsträger 5 in allen sechs Freiheitsgraden mit dem Unterrahmen 14 des Straßenfahrzeuges kraftschlüssig verbunden.

### Aufstellung der verwendeten Bezugszeichen

- 1: Drehgestellrahmen
- 2: Feder
- 3: Auflage
- 4: Wiege
- 5: Betätigungsträger
- 6: Drehpfannenoberteil
- 7: Drehpfannenunterteil
- 8a: Quermitte
- 8b: Längsmitte
- 9: Konsole
- 10: Schwinge
- 10a: Schwingenarm
- 11: Bolzen
- 12: Gelenkverbindung
- 13: Konsole
- 14: Unterrahmen (des Straßenfahrzeuges)
- 15: Konsole
- 16: Hubeinrichtung
- 17: Bolzen
- 18: Bolzen
- 19: Konsole
- 20: Gleitstück
- 21: Verriegelung
- 22: Anflanschebene
- 23: Rad
- 24: Querträger
- 25: Langträger
- 26: Federaußenkante
- 27: Achsmitte

## Patentansprüche

1. Wiegen-Drehgestell, insbesondere für Zweiwegefahrzeuge , im wesentlichen gebildet aus Rahmen (1), Wiege (4), Wiegenfederung (2), mit einer zwischen der Wiege und dem Fahrzeugrahmen (14) angeordneten Einrichtung bestehend aus einem Betätigungsträger (5) und aus zwischen Betätigungsträger und Fahrzeugrahmen angeordneter Schwinge (10) und Hubeinrichtung (16), wobei der Drehgestellrahmen (1) verwindungsweich ausgebildet ist und die Wiege (4) innerhalb des Bauraumes des Drehgestellrahmens (1) zwischen den Querträgern (24) und Langträgern (25) eingebettet ist und in den Ecken des Drehgestellrahmens (1) nach oben hin geneigte Federn (2) angeordnet sind, die mit Auflagen (3) an der Wiege (4) anliegen, und wobei ein Drehpfannenoberteil (6) des Betätigungsträgers (5) auf einem Drehpfannenunterteil (7) der Wiege (4) aufliegt und zwischen Wiege (4) und Betätigungsträger (5) auf der Wiege (4) beidseitig zur Längsmitte (8b) auf der Quermitte (8a) Gleitstücke (20) und auf dem Betätigungsträger (5) beidseitig zur Längsmitte (8b) auf der Quermitte (8a) Konsolen (9) angeordnet sind, die jeweils einen Schwingenarm (10a) einer Schwinge (10) mittels Bolzen (11) gelenkig aufnehmen, wobei die Schwingenarme (10a) an ihren anderen Enden untereinander torsionssteif verbunden sind und die Schwinge (10) über eine Gelenkverbindung (12) über Konsolen (13) mit dem Unterrahmen (14) des Straßenfahrzeuges gelenkig verbunden ist, und auf dem Betätigungsträger (5) beidseitig zur Längsmitte (8b) jedoch zur Quermitte (8a) versetzt Hubeinrichtungen (16) an Konsolen (15) mittels Bolzen (17) und mit ihren anderen Enden über Bolzen (18) und Konsolen (19) an dem Unterrahmen (14) des Straßenfahrzeuges gelenkig angebracht sind.

2. Drehgestell nach Anspruch 1, dadurch gekennzeichnet, daß die Federaußenkanten (26) außerhalb der Anflanschebenen (22) der Räder (23) liegen.

3. Drehgestell nach Anspruch 1, dadurch gekennzeichnet, daß zweimal zwei Hubeinrichtungen (16) symmetrisch zur Längsmitte (8b) und zur Quermitte (8a) der Wiege (4) auf dem Betätigungsträger (5) angeordnet sind.

## Claims

1. Bolster-type bogie, especially for rail/road vehicles, essentially formed by a frame (1), a bolster (4), bolster springing (2), with a device arranged between the bolster and the vehicle frame (14) and comprising an actuating support (5) and a lifting device (16) and rocker (10) arranged between the actuating support and the vehicle frame, the bogie frame (1) being of torsionally flexible design and the bolster (4) being embedded between the crossmembers (24) and longitudinal members (25) within the installation space of the bogie frame (1), and upward-sloping springs (2), which rest by means of rests (3) against the bolster (4), being arranged in the corners of the bogie frame (1), and a bogie pivot (6) of the actuating support (5) resting on a pivot bearing (7) of the bogie (4), and sliders (20) being arranged at the transverse centre (8a), on both aides of the longitudinal centre (8b), on the bolster (4), between the bolster (4) and the actuating support (5), and brackets (9) being arranged at the transverse centre (8a), on both sides of the longitudinal centre (8b), on the actuating support (5), these brackets each holding one rocker arm (10a) of a rocker (10) by means of pins (11), the rocker arms (10a) being connected to one another in torsionally rigid fashion at their other ends, and the rocker (10) being connected in articulated fashion to the underframe (14) of the road vehicle via brackets (13) by way of an articulated joint (12), and, on the actuating support (5), on both sides of the longitudinal centre (8b) but offset in relation to the transverse centre (8a), lifting devices (16) being attached in articulated fashion to brackets (15) by means of pins (17) and, at their other ends, by way of pins (18) and brackets (19) to the underframe (14) of the road vehicle.

2. Bogie according to Claim 1, characterized in that the outer edges (26) of the springs lie to the outside of the flange-mounting planes (22) of the wheels (23).

3. Bogie according to Claim 1, characterized in that two sets of two lifting devices (16) are arranged on the actuating support (5) symmetrically to the longitudinal centre (8b) and to the transverse centre (8a) of the bolster (4).

## Revendications

1. Bogie à traverse danseuse, en particulier pour véhicules rail-route, formé essentiellement d'un châssis (1), d'une traverse danseuse (4), d'une suspension de la traverse danseuse (2), avec un équipement disposé entre la traverse danseuse et le châssis du véhicule (14), se composant d'une poutre de commande (5) et d'une bielle oscillante (10) disposés entre la poutre de commande et le châssis du véhicule ainsi que d'un dispositif de levage (16), dans lequel le châssis du bogie (1) est peu résistant à la torsion et la traverse danseuse (4) est logée à l'intérieur du volume de construction du châssis du bogie (1) entre les traverses (24) et las longerons (25) et des ressorts (2) inclinés vers le haut sont disposés dans les coins du châssis du bogie (1), qui prennent appui sur la traverse danseuse (4) par des faces (3), et dans lequel une partie supérieure (6) du pivot de bogie de la poutre de commande (5) repose sur une partie inférieure (7) du pivot de bogie de la traverse danseuse (4) et, entre la traverse danseuse (4) et la poutre de commande (5), des patins (20) sont disposés sur la traverse danseuse (4) sur le milieu transversal (8a) de part et d'autre du milieu longitudinal (8b) et des consoles (9) sont disposées sur la poutre de commande (5) sur le milieu transversal (8a) de part et d'autre du milieu longitudinal (8b), qui reprennent chacune en articulation au moyen de boulons (11) un bras oscillant (10a) d'une bielle oscillante (10), dans lequel les bras oscillants (10a) sont reliés l'un à l'autre à leurs autres extrémités de façon rigide en torsion et la bielle oscillante (10) est reliée en articulation par des consoles (13), par l'intermédiaire d'une liaison articulée (12), au châssis inférieur (14) du véhicule routier, et des dispositifs de levage (16) sont placés sur la poutre de commande (5) de part et d'autre du milieu longitudinal (8b) mais cependant décalés par rapport au milieu transversal (8a), en articulation à des consoles (15) au moyen de boulons (17) et, par leurs autres extrémités au moyen de boulons (18) et de consoles (19), au châssis inférieur (14) du véhicule routier.

2. Bogie suivant la revendication 1, caractérisé en ce que les arêtes extérieures (26) des ressorts sont situées à l'extérieur des plans de contact (22) des roues (23).

3. Bogie suivant la revendication 1, caractérisé en ce que deux fois deux dispositifs de levage (16) sont disposés sur la poutre de commande (5) symétriquement au milieu longitudinal (8b) et au milieu transversal (8a) de la traverse danseuse (4).
